# EUROPEAN PATENT APPLICATION

(11) **EP 3 099 061 A1**
(43) Date of publication of application: **30.11.2016**
(21) Application number: 14880351.3
(22) Date of filing: 08.12.2014
(51) Int. Cl.: H04N 5/915, G08B 25/00, H04N 5/76, H04N 7/18

(54) **IMAGE SEARCH SYSTEM AND IMAGE SEARCH METHOD**

(30) Priority: 23.01.2014 JP 2014010243
(71) Applicant: Hitachi Kokusai Electric Inc., Tokyo 101-8980 (JP)
(72) Inventor: NISHINO, Sho, Kodaira-shi Tokyo 187-8511 (JP)
(74) Representative: D Young & Co LLP
(86) International application number: PCT/JP2014/082425
(87) International publication number: WO 2015/111312

(57) **Abstract**

The present invention is provided with: a receiving means for receiving, via a network, alarm information pertaining to dangerous substance detection as transmitted from a detection device; a target person extraction means for performing, on the basis of alarm-issued-time information included in the alarm information received by the receiving means, a face image search on image data from an image-capturing device installed in the periphery of a detection device by using the alarm-issued time and a prescribed time before the alarm-issued time as search conditions, and extracting a target person suspected of possessing the dangerous substance; a gray list registration means for registering, in a gray list, the target person suspected of possessing the dangerous substance as extracted by the target person extraction means; and a target person search means for periodically executing, for each of the target persons suspected of possessing the dangerous substance as registered in the gray list by the gray list registration means, a similar face image search on image data recorded in a recording device, the present invention being capable of more quickly and accurately discovering a person possessing an explosive from among a large number of passengers.

## Description

### TECHNICAL FIELD

The present invention relates to an image search system and an image search method, and more particularly, to an image search system and an image search method capable of tracking a particular person by using a detection result of an explosive detection device and a similar image search system by connecting, via a network, the similar image search system for person search of a video monitor system and a security system including the explosive detection device.

### BACKGROUND ART

Conventionally, a video monitor system has been installed for the purpose of, e.g., preventing crimes and accidents in facilities and locations visited by many people such as hotels, buildings, convenience stores, banking facilities, dams, and roads. With the video monitor system, an image-capturing device such as a camera captures images of persons and the like which are to be monitored, and the video is transmitted to a monitor center such as an administration office, a security guards room, and the like, and an observer stationed therein monitors the video, and the observer gives warning in accordance with the purpose or necessity, or records the video.

In recent years, video monitor systems having a search function for easily finding a desired video from among recorded data captured by an image-capturing device such as a monitor camera are widely prevalent. For example, a system having a sophisticated search function has been emerged to automatically detect an occurrence of a particular phenomenon (event) in the captured video in real time by using an image recognition technique and recording the occurrence of the particular phenomenon (event) and the video, so that the video can be searched for after the occurrence of the particular phenomenon (event). A typical example of such systems includes a person search function. The person search function is a function for recording, in real time, an appearance of a person in the video as a target of automatic detection, and capable of searching an image in which a person emerges from among the recorded image after the recording.

For example, a person search system is known to cause a computer to search a desired person from a video (motion picture) recorded or captured by multiple monitor cameras and the like by using an image recognition technique and the like (for example, see Patent Literatures 1 to 3). Patent Literature 1 discloses a person search system and a person search method cutting a portion where (the face of) a person appears from an image, extracting a color histogram and the like as a feature amount for individually identifying a person, and estimates that the person in the image is the same person as the desired person in a case where this feature amount is similar to the desired person.

When it is possible to determine whether a person is the same person or not with a certain level of accuracy, the same person captured at different times by multiple different cameras is associated as described in Patent Literature 2, so that the movement of the person can be tracked in a much larger area that cannot be compared with a case where it is captured with a single camera, various applications have been suggested. For example, Patent Literature 3 discloses an image security system identifying a movement path of a person by searching the captured video and using the movement path for security management.

In the present day when the threat of terrorism is expanding all over the world, a dangerous object detection method for immediately finding an explosive holder has been developed in order to prevent terrorism and crimes using explosives. Patent Literature 4 describes an explosive detection device using a mass spectrometer. The explosive detection device of Patent Literature 4 uses a sampling probe to collect gas leaked out of a luggage and the like, and ionizing the gas and detecting the gas by using a mass spectrometer, so that the explosive detection device determines whether a dangerous object exists or not. A technique using a mass spectrometer as a detection unit of a security system and improving the inspection and the reliability of the inspection is described in Patent Literature 5. In this security system, a signal obtained by an analysis unit (a terminal system) is sent to a support system by a communication circuit, and the support system determines whether there exists a dangerous object or not. A determination result of the support system is sent by the communication circuit to the terminal system. Therefore, an operator who uses the terminal system does not need any special knowledge or training.

### CITATION LIST

### PATENT LITERATURE

- PATENT LITERATURE 1:: JP-A-2009-027393
- PATENT LITERATURE 2:: JP-B- 4700477
- PATENT LITERATURE 3:: JP-A- 2012-068717
- PATENT LITERATURE 4:: JP-A- 2000-028579
- PATENT LITERATURE 5:: JP-A- 2003-014695

### SUMMARY OF INVENTION

### TECHNICAL PROBLEM

The person search function using the image search system explained above is a function for searching a particular person on the basis of a video obtained from an image-capturing device such as a monitor camera, but in reality, in a case where a certain phenomenon occurs, a search is performed by using information other than the video as a trigger. For example, when a security guard and the like receive a report of a discovery of an explosive holder, the security guard and the like perform a person search by using the person search function on the basis of the information (including a location and a time). However, it may take a long time to receive the report of the discovery of the explosive holder, or the security guard may be in an environment in which the security guard cannot readily use the person search function. Therefore, in a case where a certain phenomenon occurs, it is desired to activate the person search function on the basis of information about an occurrence of a phenomenon substantially at the same time as the occurrence of the phenomenon. For example, it is desired to immediately operate the person search function by using the time when the explosive detection device was detected.

The explosive detection device developed in the past is presumed to be used mainly in airports, important facilities, and the like, and the device was considered to be used for the purpose of inspecting a relatively small number of persons, but there are many problems when the explosive detection device is used in mass transits that are used by many passengers such as, e.g., a station. For example, in order to thoroughly perform luggage inspection for the purpose of discovering an explosive carried in a concealed manner, many inspection staff members are required, or it takes a long time to perform the inspection, which greatly reduces the convenience of mass transits, and this makes the explosive detection device impractical. Therefore, in facilities used by many passengers, it is desired to have a method for enabling inspection in a short time by using an explosive detection device.

The present invention is made in view of such circumstances, and with the present invention, a security system based on an explosive detection device and an image search system based on an application of a similar image search technique, which operated independently of each other, are connected via a network, so that the image search system can be operated in a shorter time on the basis of information about discovery of a subject suspected of an explosive possession given by the explosive detection device, it is an object of the present invention to find an explosive holder, in a shorter time and more appropriately, from among a great number of passengers.

### SOLUTION TO PROBLEM

To achieve the above object, in the present invention, image search system and an image search method are constituted as follows.

According to the present invention, there is provided an image search system of the present invention including at least one image-capturing device outputting captured image data, a recording device recording image data received from the image-capturing device to a recording medium, a detection device detecting a dangerous object, and a network performing communication by connecting devices with each other, the image search system including: reception means receiving, via the network, alarm information based on dangerous object detection transmitted from the detection device; subject extraction means extracting a subject suspected of a dangerous object possession by performing face image search of image data given by the image-capturing device installed around the detection device by adopting, as a search condition, an alarm activation time and a predetermined time before the alarm activation time, on the basis of the alarm activation time information included in the alarm information received by the reception means; gray list registration means registering, to a gray list, the subject suspected of the dangerous object possession extracted by the subject extraction means; and subject search means carrying out similar face image search, with a regular interval of time, of the image data recorded in the recording device for each subject suspected of the dangerous object possession registered in the gray list by the gray list registration means.

Further, the image search system of the present invention includes: subject information display means displaying, on a screen, position information about an installation location of the image-capturing device capturing the subject suspected of the dangerous object possession and the alarm activation time, in a case where the subject suspected of the dangerous object possession registered in the gray list is found by the subject search means; and track display means displaying, on a map, a track of the subject suspected of the dangerous object possession, on the basis of the position information about the image-capturing device capturing the subject suspected of the dangerous object possession displayed by the subject information display means.

Further, the image search system of the present invention includes multi-track display means searching each of a plurality of subjects suspected of the dangerous object possession registered in the gray list, and displaying each of the plurality of tracks simultaneously.

Further, the image search system of the present invention includes dangerous object holder identifying means setting alarm activation time before-and-after information and alarm activation detection device proximity information, and performing similar face image search of all videos corresponding to the set information, so that the dangerous object holder identifying means registers the search result as the subject suspected of the dangerous object possession to the gray list, and identifies, for the subject suspected of the dangerous object possession registered in the gray list, a dangerous object holder by using a plurality of videos captured at a different location and at a different time from a camera video that is set at a location where alarm information is activated.

Further, the image search system of the present invention includes search result map display means displaying, on a map, a result of similar face image search that is performed by setting the alarm activation time before-and-after information and the alarm activation detection device proximity information.

Further, the image search system of the present invention includes passage person number counting means providing a gate in the detection device, having a person detection sensor installed at an entrance/exit of the gate to perform detection to find how many people passed through the gate within a predetermined period of time, transmitting the person number information about the number of people that passed through the gate to the recording device in the recording device via the network, and using the person number information for making the gray list of the subject suspected of the dangerous object possession.

According to the present invention, there is provided an image search method of the present invention for an image search system including at least one image-capturing device outputting captured image data, a recording device recording image data received from the image-capturing device to a recording medium, a detection device detecting a dangerous object, and a network performing communication by connecting devices with each other, the image search step including: a reception step for receiving, via the network, alarm information based on dangerous object detection transmitted from the detection device; a subject extraction step for extracting a subject suspected of a dangerous object possession by performing face image search of image data given by the image-capturing device installed around the detection device by adopting, as a search condition, an alarm activation time and a predetermined time before the alarm activation time, on the basis of the alarm activation time information included in the alarm information received by the reception step; a gray list registration step for registering, to a gray list, the subject suspected of the dangerous object possession extracted by the subject extraction step; and a subject search step for carrying out similar face image search, with a regular interval of time, of the image data recorded in the recording device for each subject suspected of the dangerous object possession registered in the gray list by the gray list registration step.

Further, the image search method of the present invention includes: a subject information display step for displaying, on a screen, position information about an installation location of the image-capturing device capturing the subject suspected of the dangerous object possession and the alarm activation time, in a case where the subject suspected of the dangerous object possession registered in the gray list is found by the subject search step; and a track display step for displaying, on a map, a track of the subject suspected of the dangerous object possession, on the basis of the position information about the image-capturing device capturing the subject suspected of the dangerous object possession displayed by the subject information display step.

The image search method of the present invention includes a multi-track display step for searching each of a plurality of subjects suspected of the dangerous object possession registered in the gray list, and displaying each of the plurality of tracks simultaneously.

Further, the image search method of the present invention includes a dangerous object holder identifying step for setting alarm activation time before-and-after information and alarm activation detection device proximity information, and performing similar face image search of all videos corresponding to the set information, thus registering the search result as the subject suspected of the dangerous object possession to the gray list, and identifying, for the subject suspected of the dangerous object possession registered in the gray list, a dangerous object holder by using a plurality of videos captured at a different location and at a different time from a camera video that is set at a location where alarm information is activated.

The image search method of the present invention includes a search result map display step for displaying, on a map, a result of similar face image search that is performed by setting the alarm activation time before-and-after information and the alarm activation detection device proximity information.

The image search method of the present invention includes a passage person number counting step for providing a gate in the detection device, having a person detection sensor installed at an entrance/exit of the gate to perform detection to find how many people passed through the gate within a predetermined period of time, transmitting the person number information about the number of people that passed through the gate to the recording device in the recording device via the network, and using the person number information for making the gray list of the subject suspected of the dangerous object possession.

According to the present invention, there is provided a recording device of the present invention connected, via a network, to at least one image-capturing device outputting captured image data and a detection device detecting a dangerous object, and recording image data received from the image-capturing device to a recording medium, the recording device including: reception means receiving, via the network, alarm information based on dangerous object detection transmitted from the detection device subject extraction means for extracting a subject suspected of a dangerous object possession by performing face image search of image data given by the image-capturing device installed around the detection device by adopting, as a search condition, an alarm activation time and a predetermined time before the alarm activation time, on the basis of the alarm activation time information included in the alarm information received by the reception means; gray list registration means registering, to a gray list, the subject suspected of the dangerous object possession extracted by the subject extraction means; and subject search means carrying out similar face image search, with a regular interval of time, of the image data recorded in the recording device for each subject suspected of the dangerous object possession registered in the gray list by the gray list registration means.

### ADVANTAGEOUS EFFECTS OF INVENTION

According to the present invention, a security system based on an explosive detection device and an image search system based on an application of a similar image search technique, which operated independently of each other, are connected via a network, so that the image search system can be operated in a shorter time on the basis of information about discovery of a subject suspected of an explosive possession given by the explosive detection device, and an explosive holder can be found in a shorter time and more appropriately from among a great number of passengers.

### BRIEF DESCRIPTION OF DRAWINGS

[FIG. 1] FIG. 1 is a figure illustrating an example of a system configuration in which a similar image search system and a security system including a detection device are connected via a network according to an embodiment of the present invention.
[FIG. 2] FIG. 2 is a figure illustrating an example of a hardware configuration of an image-capturing device used for the similar image search system according to an embodiment of the present invention.
[FIG. 3] FIG. 3 is a figure illustrating an example of a hardware configuration of a recording device used for the similar image search system according to an embodiment of the present invention.
[FIG.4] FIG. 4 is a figure illustrating an example of a hardware configuration of a terminal device used for the similar image search system according to an embodiment of the present invention.
[FIG. 5A] FIG. 5A is a figure illustrating an example of a feature amount of the first search key image according to a first embodiment.
[FIG. 5B] FIG. 5B is a figure illustrating an example of a feature amount of an image obtained from processing for selecting the same person from a search result in the first embodiment.
[FIG. 5C] FIG. 5C is a figure illustrating an example of a feature amount of an image obtained from processing for selecting the same person before and after the search result in the first embodiment.
[FIG. 5D] FIG. 5D is a figure illustrating an example of a feature amount of an image obtained from predetermined image processing in the first embodiment.
[FIG. 5E] FIG. 5E is a figure illustrating an example of a result obtained by clustering candidates of search key images and a feature amount representing each cluster in the first embodiment.
[FIG. 6] FIG. 6 is a figure illustrating an example of a procedure for carrying out a similar image search in the similar image search system according to an embodiment of the present invention.
[FIG. 7] FIG. 7 is a figure illustrating an example of a search screen that can be used for the similar image search system according to an embodiment of the present invention.
[FIG. 8] FIG. 8 is a figure illustrating an example of a detection device and a dangerous object determination method in a security center the security system according to an embodiment of the present invention.
[FIG. 9] FIG. 9 is a figure illustrating an example of a hardware configuration of a detection device the security system according to an embodiment of the present invention.
[FIG. 10] FIG. 10 is a figure illustrating an example of a dangerous object determination method in the security center of the security system according to an embodiment of the present invention.
[FIG. 11] FIG. 11 is a figure illustrating an example of a search method for searching a subject suspected of a dangerous object possession performed with a security system including a detection device and a similar image search system according to an embodiment of the present invention.

### DESCRIPTION OF EMBODIMENTS

The present invention relates to an image search system capable of tracking a particular person by using a detection result of an explosive detection device and a similar image search system by connecting, via a network, the similar image search system and a security system including the explosive detection device, and also relates to a method therefor, and an embodiment thereof will be hereinafter explained.

An embodiment according to the present invention will be explained with reference to drawings. In the explanation about each drawing, the constituent elements having the same function are denoted with the same reference numerals, and the explanation thereabout is omitted in order to avoid repeated explanation thereabout as much as possible.

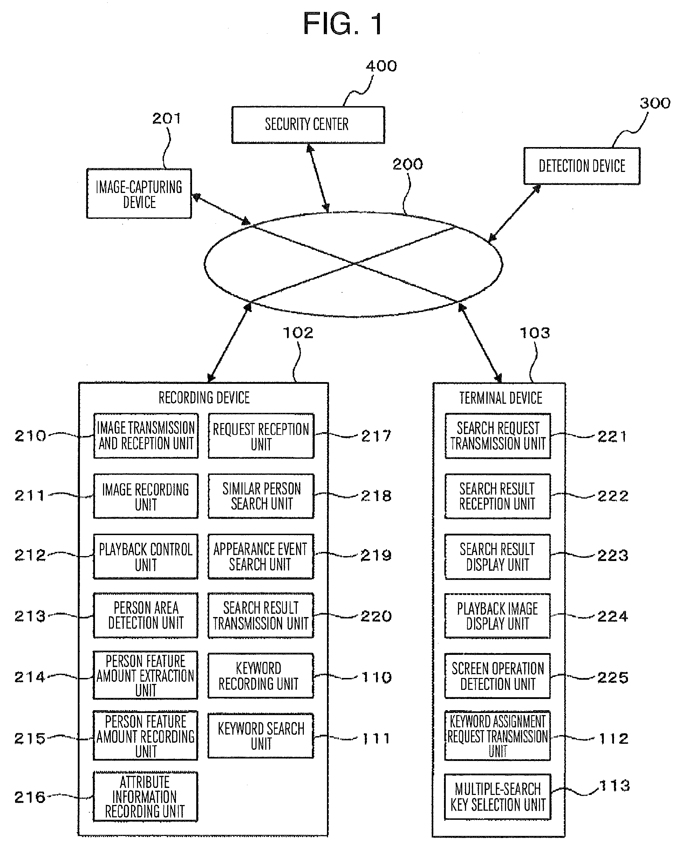

First, a configuration of the similar image search system according to an embodiment of the present invention will be explained with reference to FIG. 1 to FIG. 4. FIG. 1 illustrates an example of a system configuration of the similar image search system according to an embodiment of the present invention.

As illustrated in FIG. 1, the similar image search system is configured so that an image-capturing device 201, a recording device 102, and a terminal device 103 are connected to a network 200, in such a manner that the image-capturing device 201, the recording device 102, and the terminal device 103 can communicate with each other. Image-capturing devices 201 are considered to be installed at multiple locations.

The network 200 is communication means performing communication by connecting devices with each other such as a private network, an intranet, the Internet, and a wireless local area network (LAN) performing data communication.

The image-capturing device 201 is a device such as a network camera, a monitor camera, and the like carrying out digital conversion processing on an image captured by a charge coupled device (CCD), a complementary metal oxide semiconductor (CMOS) device, and the like and outputting image data of a conversion result to a recording device via the network 200.

The recording device 102 is a device such as a network digital recorder recording, to a recording medium such as an HDD, image data received from the image-capturing device 201 via the network 200. This device is also provided with a person search function including a method of the present invention.

The recording device 102 includes, as a functional configuration, processing units, i.e., an image transmission and reception unit 210, an image recording unit 211, a playback control unit 212, a person area detection unit 213, a person feature amount extraction unit 214, a person feature amount recording unit 215, an attribute information recording unit 216, a request reception unit 217, a similar person search unit 218, an appearance event search unit 219, a search result transmission unit 220, a keyword recording unit 110, and a keyword search unit 111.

The image transmission and reception unit 210 is a processing unit inputting and outputting an image from the outside of the device, and receives input image data from the image-capturing device 201 and transmits output image data to the terminal device 103.

The image recording unit 211 writes input image data to the recording medium, and reads output image data from the recording medium. During writing, not only image data but also an image ID (an identification information of the image) which is information for reading the image data is recorded together.

The playback control unit 212 controls the video playback to the terminal device 103.

The person area detection unit 213 detects a person by using an image recognition technique on input image data, and determines whether there is a person in the image. In a case where a person exists in the image, the person area detection unit 213 calculates a coordinate of that area.

The person feature amount extraction unit 214 calculates a feature amount of the area detected by the person area detection unit 213 by using an image recognition technique. The person feature amount to be calculated therein may include, e.g., a shape or a direction of a contour of a person, a color of skin, gait (the way a person moves its legs like at what timing and which leg the person moves), or the shape or the direction of the contour of face which is a representing portion for identifying the person, or the size, shape, layout relationship or the like of the main constituent elements including eyes, nose, and mouth. However, the types and numbers of feature quantities used here are not limited thereto in the present embodiment.

The person feature amount recording unit 215 executes recording and reading of the feature amount calculated by the person feature amount extraction unit 214 in and from a recording medium. The recording medium of the image data for the image recording unit 211 and the recording medium of the person feature amount for this processing unit may be identical to each other or different from each other.

The attribute information recording unit 216 executes recording and reading of attribute information associated with the image data in and from a recording medium. The attribute information includes, e.g., an image capturing time, image-capturing device number, an image-capturing location, and the like.

The request reception unit 217 receives a search request and a keyword assignment request from the terminal device 103. The search request includes a similar image search request and an appearance event search request.

The similar person search unit 218 performs similar image search in a case where the request received by the request reception unit 217 is a similar person search request.

The appearance event search unit 219 performs appearance event search in a case where the request received by the request reception unit 217 is an appearance event search request.

The search result transmission unit 220 transmits the similar person search result and the appearance event search result obtained from the similar person search unit 218 and the appearance event search unit 219 to the terminal device 103.

The keyword recording unit 110 executes recording and reading of a keyword in and from a recording medium based on the keyword assignment request received by the request reception unit 217.

The keyword search unit 111 performs keyword search when a keyword is included in the search request data received by the request reception unit 217.

The terminal device 103 may be implemented by a general personal computer (PC) having a network function or may be a dedicated search terminal.

The terminal device 103 includes, as a functional configuration, processing units, i.e., a search request transmission unit 221, a search result reception unit 222, a search result display unit 223, a playback image display unit 224, a screen operation detection unit 225, a keyword assignment request transmission unit 112, and a multiple-search key selection unit 113. This device is equipped with a person search function for implementing the method of the present invention.

The search request transmission unit 221 transmits a search request to the recording device 102. In a case of the similar person search, the search request data includes a search key image or a feature amount thereof as a search key of a similar person search. The search request data may include narrowing-down parameters.

The search result reception unit 222 receives a search result from the recording device 102. The data received as the search result includes a set of images that can be obtained by performing a similar person search or an appearance event search in the recording device 102. Each of the images in the set is created by performing an image size reduction processing from videos recorded in the recording device 102. Hereinafter, each image will be referred to as a "search result image" and data transmitted and received as the search result will be referred to as "search result data".

The search result display unit 223 displays a search result received by the search result reception unit 222 on the screen. An example of the screen displayed will be described later.

The playback image display unit 224 displays, on the screen, successive moving images in the input image data inputted from the recording device 102.

The screen operation detection unit 225 detects and acquires operations by the user.

The keyword assignment request transmission unit 112 transmits a keyword assignment request to the recording device 102.

When multiple candidates of search key images are selected, the multiple-search key selection unit 113 performs processing for appropriately selecting a less number of search key images. The multiple-search key selection unit 113 may be provided in the recording device 102.

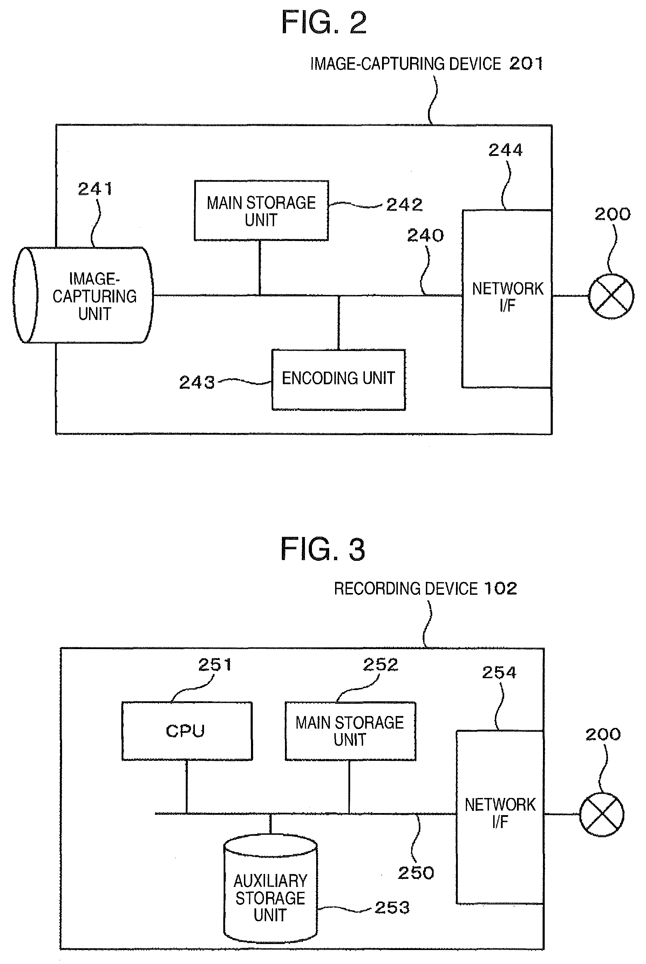

FIG. 2 illustrates an example of hardware configuration of the image-capturing device 201 used for the similar image search system according to an embodiment of the present invention.

As illustrated in FIG. 2, the hardware configuration of the image-capturing device 201 is in such a form that an image-capturing unit 241, a main storage unit 242, an encoding unit 243 and a network interface (I/F) 244 which are linked by a bus 240.

The image-capturing unit 241 converts an optical signal captured by a lens into digital data. The encoding unit 243 encodes the digital data outputted from the image-capturing unit 241 to convert it into image data such as Joint Photographic Experts Group (JPEG). The main storage unit 242 stores the captured digital data and the encoded image data. The network I/F 244 is an interface for transmitting the image data in the main storage unit 242 to the recording device 102 via the network 200.

FIG. 3 illustrates an example of a hardware configuration of the recording device 102 used for the similar image search system according to an embodiment of the present invention.

As illustrated in FIG. 3, the hardware configuration of the recording device 102 includes a central processing unit (CPU) 251, a main storage unit 252, an auxiliary storage unit 253, and a network I/F 254 which are linked by a bus 250.

The CPU 251 executes a program for controlling each component of the recording device 102 and implementing the functions thereof. The main storage unit 252 is an intermediate memory that is implemented by a semiconductor device, such as a dynamic random access memory (DRAM), and loads and stores image data for searching and the program executed by the CPU 251. The auxiliary storage unit 253 is a storage that is implemented by an HDD or a flash memory and has a larger capacity than that of the main storage unit 252 and stores image data or a program. The network I/F 254 is an interface for receiving image data from the image-capturing device 201 via the network 200, receiving a search keyword from the terminal device 103, or transmitting image data to the terminal device 103.

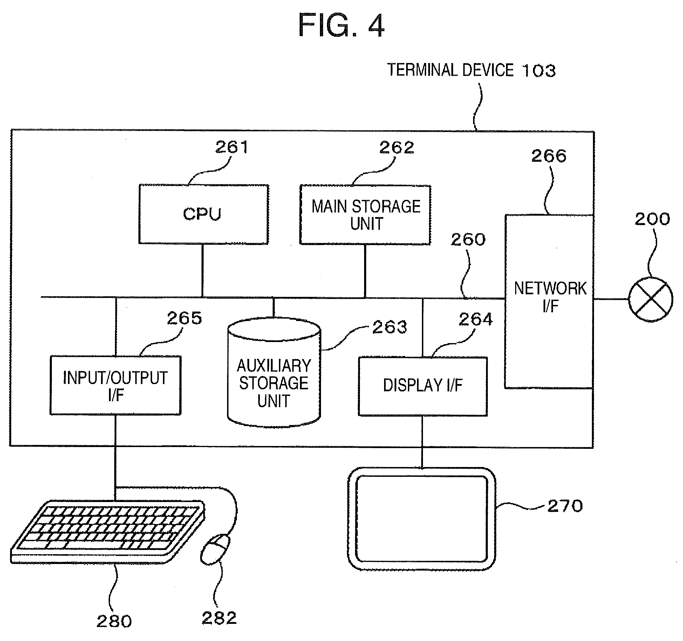

FIG. 4 illustrates an example of a hardware configuration of the terminal device 103 used for the similar image search system according to an embodiment of the present invention.

As illustrated in FIG. 4, the hardware configuration of the terminal device 103 includes a CPU 261, a main storage unit 262, an auxiliary storage unit 263, a display I/F 264, an input/output I/F 265, and a network I/F 266 which are linked by a bus 260. The display I/F 264 is connected to the display device 270. The input/output I/F 265 is connected to an input/output device, such as a keyboard 280 and a mouse 282.

The CPU 261 executes a program for controlling each component of the terminal device 103 and implementing the functions thereof. The main storage unit 262 is an intermediate memory that is implemented by a semiconductor device, such as a DRAM and loads and stores image data for displaying and a program executed by the CPU 261. The auxiliary storage unit 263 is a memory that is implemented by an HDD or a flash memory and has a larger capacity than that of the main storage unit 262 and stores a search keyword, image data, and a program. The display I/F 264 is an interface for connecting to the display device 270. The input/output I/F 265 is an interface for connecting to an input/output device, such as a keyboard 280 and a mouse 282. The network I/F 266 is an interface for, transmitting a search keyword to the recording device 102, or receiving the image data from the recording device 102 via the network 200. The display device 270 is a device, such as a liquid crystal display (LCD), for displaying an image or a moving image thereon. The user uses an input/output device such as the keyboard 280 and the mouse 282 to manipulate an image displayed on the display unit of the display device 270, and, for example, the user operates a graphical user interface (GUI) to operate the terminal device 103 and the similar image search system.

Subsequently, a specific example of similar person search performed by the similar image search system according to an embodiment of the present invention will be explained.

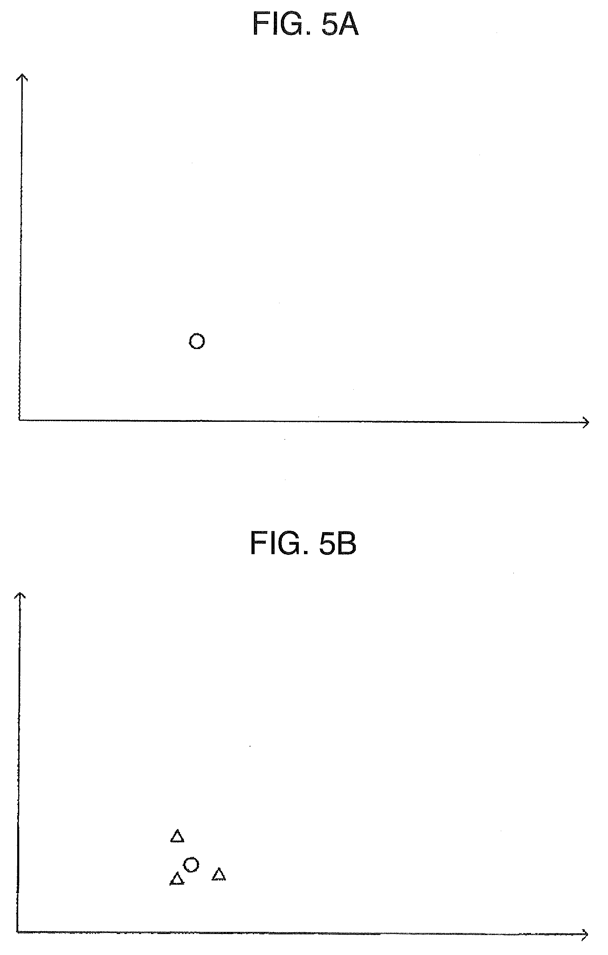

The specific example of the similar image search system according to an embodiment of the present invention will be explained with reference to FIG. 5A to FIG. 5E and

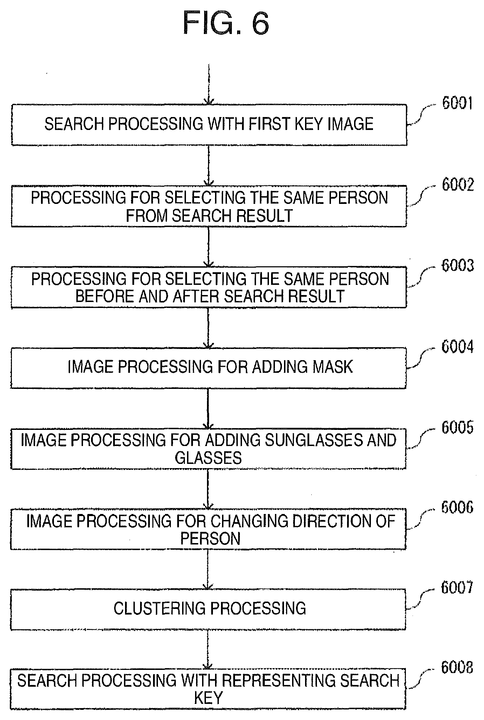

FIG. 6. FIG. 6 illustrates an example of a procedure for carrying out the similar person search. FIG. 5A to FIG. 5E illustrate an example of a feature amount of an image which is a candidate of a search key image in accordance with a procedure for carrying out the similar person search.

First, in search processing 6001 with a first key image, the first search is performed with the first search key image selected by the user. In this case, an image having a feature amount having a short distance to a feature amount (in this example, a feature amount of a person in the image) of the image selected as the first search key image is searched for with the similar person search unit 218 in the recording device 102, and for example, as a result, ten images are found by the search.

In FIG. 5A, the feature amount of the first search key image is indicated by "o". In this case, in order to easily understand the explanation, the feature amount of the image is expressed in two dimensions, but in reality, the feature amount of the image may have, for example, an extremely large number of dimensions, e.g., several hundred dimensions.

In this case, three out of ten images which is the search result is the same target as the first search key image. In processing 6002 for selecting the same person from the search result, three images in question are selected from ten search result images. More specifically, for example, the user operates the mouse 282 of the terminal device 103 to select and click the image in question. Alternatively, a method may be used in which a threshold value may be provided for the feature amount of the image, and if a distance between the feature amount of the first search key image and the feature amount of the search result image is equal to or less than threshold value, the image is determined to be the same target (the same person), and the corresponding search result image may be automatically selected.

FIG. 5B includes the contents of FIG. 5A, and in addition, the feature amount of the image selected in processing 6002 for selecting the same person from a search result is denoted as "Δ". The image selected in such processing is adopted as a new candidate of a search key image.

In this case, when the search result image is one of continuous images forming a moving image, images of the same person are likely to be included before and after the search result image in that moving image. In processing 6003 for selecting the same person before and after the search result, an image determined to be the same person (i.e., the same person as the person of the search key image) as the person in the search result image on the basis of the positon, the travel speed, and the like of the person is automatically selected from multiple images included in a time zone having a predetermined length before and after the search result image in the moving image from which the search result image is extracted. Optionally, the user may input a designation.

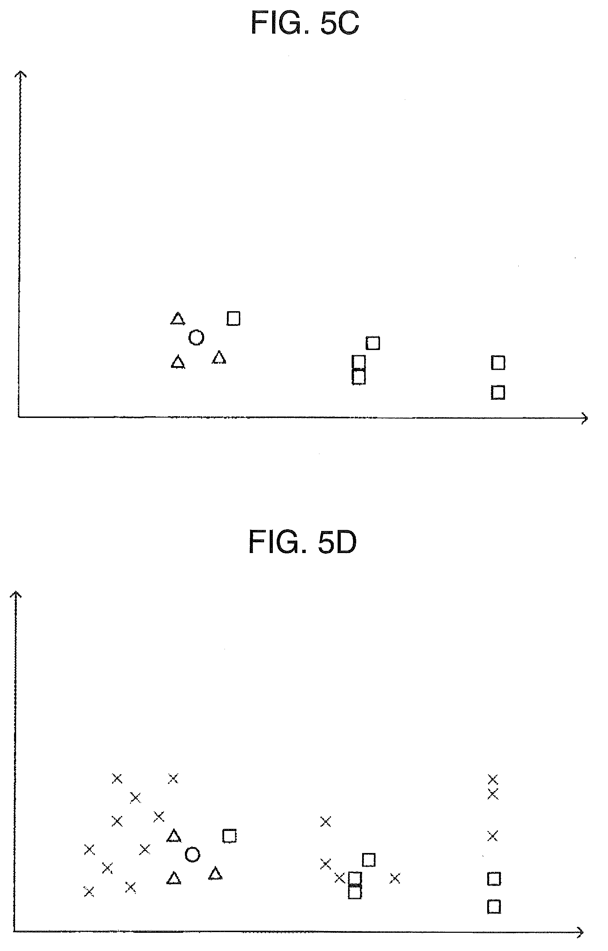

FIG. 5C includes the contents of FIG. 5B, and in addition, the feature amount of the image selected in processing 6003 for selecting the same person before and after the search result is denoted as "□". The image selected in such processing is adopted as a new candidate of a search key image.

In image processing 6004 for adding a mask, an image additionally having a mask covering a nose and a mouth is generated in image processing for the image of the person newly adopted as a candidate of the search key image in the processing performed then, and processing for adding it to the new candidate of the search key image. On the contrary, in a case where the image of the person before the image processing is given a mask for covering a nose and a mouth, processing for detaching the mask may be performed in image processing. Multiple types of images may be prepared as the image of the mask.

In image processing 6005 for adding sunglasses and glasses, an image additionally having sunglasses and glasses is generated in image processing on the image of the person adopted as the new candidate of the search key image in the processing performed until then, and processing for adding it to the new candidate of the search key image. On the contrary, processing may be performed to take off sunglasses and glasses in image processing in a case where the image of the person before the image processing has sunglasses and glasses. Multiple types of images are prepared as the image of the sunglasses and the glasses. Optionally, the image processing 6004 for adding the mask and the image processing 6005 for adding sunglasses and glasses may be performed as necessary, and be combined with other image processing for adding hairstyle, beards, and the like.

In image processing 6006 for changing the direction of the person, an image in which the direction of the person is changed is generated in image processing on the image of the person adopted as the new candidate of the search key image in the processing performed until then, and processing for adding it to the new candidate of the search key image. There are usually multiple directions of person, but the person may be simply reversed horizontally.

FIG. 5D includes the contents of FIG. 5C, and in addition, feature quantities of multiple images generated as a result of the image processing 6004 for adding a mask, the image processing 6005 for adding sunglasses and glasses, and the image processing 6006 for changing the direction of the person are denoted with "×". The image generated by this processing is added as a new candidate of the search key image.

The image processing 6004 for adding a mask, the image processing 6005 for adding sunglasses and glasses, and the image processing 6006 for changing the direction of the person may be performed on any one of the first search key image, the image obtained as a result of the processing 6002 for selecting the same person from the search result, and the image obtained as a result of the processing 6003 for selecting the same person before and after the search result. Any one of the image processing may be performed on the target image, or two of the image processing may be performed on the target image, or three of the image processing may be performed on the target image. Image processing other than what has been described above, such as image processing for changing the brightness of the target image may be applied.

Clustering processing 6007 may be performed to derive an image (or the feature amount thereof) representing each cluster upon clustering multiple images adopted as the candidate of the search key image in the processing 6001 to 6006 performed until then. A publicly-known technique such as k-means method may be used as a clustering method. For example, an image closest to the average of the feature quantities of the images included in that cluster is used as the image representing each cluster, and the feature amount of the image is adopted as a new search key. The average of the feature quantities of the images included in the cluster may be adopted as it is as the new search key.

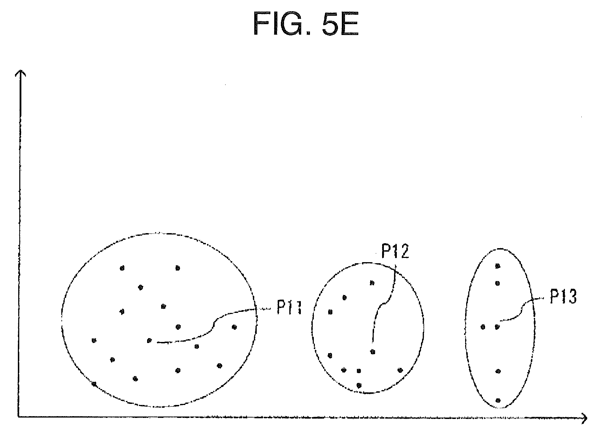

FIG. 5E illustrates how the new candidate of the search key image obtained in the processing 6001 to 6006 performed until then is classified into a cluster in the clustering processing 6007, and illustrates an example of a feature amount of an image representing each cluster. In FIG. 5E, three clusters are indicated by being encircled by frame lines, and feature quantities P11, P12, P13 of the images closest to the barycenter of the clusters are selected respectively as the feature quantities of the images representing the clusters.

In search processing 6008 performed with a representing search key, for example, a similar image search is performed on each cluster obtained in the clustering processing 6007 by using the feature amount of the representing image as a new search key, and the result is output.

In this case, in the example of FIG. 5E, there are 29 images related to the first search key image (images obtained in the processing 6001 to 6006), and therefore, it is necessary to repeat, 29 times, the search using the feature quantities of these images as the new search key, but when the similar image search is performed by using the feature quantities of the three images representing the clusters obtained in the clustering processing 6007, the search may be performed only three times while maintaining the balance of the feature quantities. In this case, the number of clusters is three, but this can be changed by setting. In the similar image search system according to an embodiment of the present invention, a series of system using the clustering processing 6007 has been explained, but the search may also be performed by using all of the 29 images, which are the images related to the first search key image, as the new search keys without performing the clustering processing 6007.

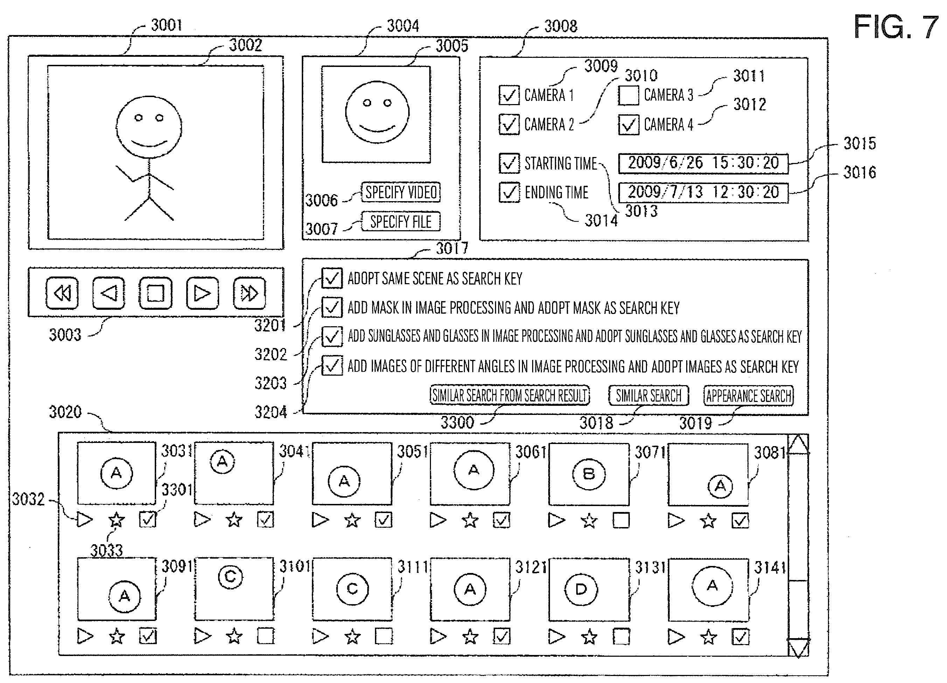

Subsequently, a screen of the terminal device 103 will be explained. FIG. 7 illustrates an example of a search screen that can be used with the similar image search system according to this example.

The search screen includes a playback image display area 3001, an image playback operation area 3003, a search key image specifying area 3004, a search narrowing-down parameter specifying area 3008, a search execution area 3017, and a search result display area 3020.

The playback image display area 3001 is an area for displaying images recorded in the recording device 102 as a moving image. The moving image 3002 of the playback image display area 3001 displays images recorded in the recording device 102 as a motion picture.

The image playback operation area 3003 is an area for operating the playback of the images recorded on the recording device 102. To each of the buttons in this area 3003, there is allocated its unique playback type. In this drawing, e.g., playback types of rewind, reverse, stop, play, and fast forward are sequentially allocated to the buttons starting from the left. As each button is properly pressed with the mouse 282 by the user, the operation on the moving image 3002 is correspondingly switched to the playback type allocated to the button.

The key image specifying area 3004 is an area for specifying and displaying a search key image. This area 3004 has a search key image 3005, a video specifying button 3006 and a file specifying button 3007.

The search key image 3005 is an image used as the first search key image for similar search. In an initial state, the search key image is not specified yet, and hence no image is displayed. Optionally, a prepared image representing an unspecified state may be displayed, or an indication of unspecified state may be provided.

The video specifying button 3006 is a button for specifying an image displayed on the playback image display area 3001 as a search key image 3005 upon pressing the button 3006.

The file specifying button 3007 is a button for specifying other images than the images recorded in the recording device 102, e.g., an image taken by a digital still camera or an image captured by a scanner, as a search key image 3005. When this button 3007 is pressed down, a dialog box for specifying files of these images is displayed so that the user can specify a desired image file therein.

The search narrowing-down parameter specifying area 3008 is an area for specifying the type and value (range) of a narrowing-down parameter for searching. This area 3008 has image-capturing device specifying checkboxes 3009, 3010, 3011, 3012, a time specifying checkbox 3013, 3014, and time specifying fields 3015, 3016.

The image-capturing device specifying checkboxes 3009, 3010, 3011, 3012 are checkboxes for specifying an image-capturing device 201 from which the image is to be searched for. When the checkboxes 3009, 3010, 3011, 3012 are pressed, a checkmark indicative of its selection is displayed on each of the checkboxes 3009, 3010, 3011, 3012. This mark is disabled when the button is pressed again and is alternately enabled and disabled when repeatedly pressing the button.

In an initial state, all the image-capturing devices 201 (cameras 1 to 4) are targeted for search, so all the image-capturing device specifying checkboxes 3009, 3010, 3011, 3012 are selected or checked.

The time specifying checkboxes 3013, 3014 are checkboxes for specifying a time range when the image is searched for. With regard to the display format, these checkboxes and the other checkboxes are the same. When the time specifying checkbox 3013 is selected, a starting time is allocated to the time range. When the time specifying checkbox 3013 is not selected, no starting time is defined for the time range, which means that a search target range includes the earliest image recorded in the recording device 102.

In a similar way, when the time specifying checkbox 3014 is selected, an ending time is allocated to the time range. When the time specifying checkbox 3014 is not selected, no ending time is defined for the time range, which means that a search target range includes the latest image recorded in the recording device 102.

The time specifying fields 3015, 3016 are input fields for specifying values of the aforementioned starting time and ending time.

In an initial state, all time zones are targeted for search, so all the time specifying checkboxes 3013 and 3014 are not checked and the time specifying fields 3015 and 3016 are empty.

The search execution area 3017 is an area for instructing image search execution. This area 3017 includes not only a similar person search button 3018 and an appearance event search button 3019 but also a similar person search button from search result 3300, a same scene checkbox 3201, a mask checkbox 3202, a sunglasses checkbox 3203, and a different angle checkbox 3204.

The similar person search button 3018 is a button for instructing execution of similar person search (search processing 6001 with the first key image in FIG. 6) by using the search key image 3005. If parameters are specified in the search narrowing-down parameter specifying area 3008, this button instructs execution of the similar person search based on the specified parameters.

The appearance event search button 3019 is a button for instructing execution of the appearance event search. If the parameters are specified in the search narrowing-down parameter specifying area 3008, this button instructs execution of the appearance event search based on the specified parameters.

The search result display area 3020 is an area for displaying a search result. The display of the search result is carried out by displaying search result images in a list. In an initial state, nothing is displayed in the search result display area 3020.

In this case, the user presses the video specifying button 3006, presses the image-capturing device specifying checkbox 3009, 3010, 3012, presses the time specifying checkboxes 3013 and 3014, and then enters '2009/6/26 15:30:20' and '2009/7/13 12:30:20' in the time specifying fields 3015 and 3016, respectively. Accordingly, as illustrated in FIG. 7, in the search key image 3005, an image of person "A" displayed on the moving image 3002 is specified as a search key image, three cameras, i.e., "camera 1", "camera 2", and "camera 4", are specified as the image-capturing device 201 desired to be used when the image is searched for, and a time period from "2009/6/26 15:30:20" to "2009/7/13 12:30:20" is specified as a desired time range when the image is searched for.

Thereafter, suppose the user presses the similar person search button 3018. Then, a search result obtained by executing the similar person search by using the search key image 3005 is displayed on the search result display area 3020. FIG. 7 illustrates an example of a search screen in this state. The display of the search result is carried out by displaying a search result image (in this example, search result images 3031 to 3141) in a list.

For example, the search result images 3031 to 3141 are displayed from the top left to the right and then on the second row from left to right in a similar order to the search key image 3005. In this display example, it can be seen that the search result image 3031 has the greatest similarity to the search key image 3005 and the search result image 3141 has the least similarity thereto.

In the example shown in this drawing, an alphabet character in a circle shown on each of the search result images 3031 to 3141 in the search result display area 3020 represent a simplified display of the face and name of person `A'. For instance, the search result image 3031 shows the appearance of the person 'A'. Of course, in the actual display of the system, actual images are displayed instead of the simplified displays.

A cue playback button 3032, a search key video specifying button 3033, and a search target checkbox 3301 are provided in the vicinity of the search result image 3031. Other search result images 3041 to 3141 are also provided in the same manner.

The cue playback button 3032 is a button for instructing the start of playback of a continuous moving image starting from the search result image 3031. For instance, when the cue playback button 3032 is pressed, the moving image 3002 is switched to the search result image 3031, so that the user can view the moving image starting from the search result image 3031.

The search key video specifying button 3033 is a button for specifying the search result image 3031 as the new search key image. For instance, when the search key video specifying button 3033 is pressed, the search key image 3005 is displayed as the search result image 3031. Thus, a re-searching using the search result image 3031 can be carried out.

The search target checkbox 3301 is a checkbox for specifying a search result image 3031 as a new search key image (or a candidate thereof) when the similar person search button from search result 3300 is pressed down. For example, images of the person "A" appeared in the search result (in this example, search result images 3031 to 3061, 3081, 3091, 3121, 3141) are all checked, and the similar person search button from search result 3300 is pressed, so that the person "A" of various patterns can be found by search.

The similar person search button from search result 3300 is a button for instructing execution of repeated similar person search (search processing 6008 with the representing search key) on the basis of a result of a similar person search with the search key image 3005. In the repeated similar person search, the similar person search is re-executed while an image selected by the user (the search target checkbox thereof is checked) is selected from among the display in the search result display area 3020 (the result of the search processing 6001 with the first key image) is adopted as the new search key image (or a candidate thereof).

The same scene checkbox 3201 is a checkbox for specifying executing of the processing 6003 (see FIG. 6) selecting the same person before and after search result from the image selected by the user from among the display in the search result display area 3020, and adding images of the result thereof (images before and after the search result that show the same person as the person in the target image) to the new candidate of the search key image.

The mask checkbox 3202 is a checkbox for specifying execution of the image processing 6004 (see FIG. 6) for adding a mask in the image selected by the user from among the display in the search result display area 3020, and adding images of the result thereof (an image additionally having a mask on the person in the target image, or an image from which the mask is removed from the person) to the new candidate of the search key image.

The sunglasses checkbox 3203 is a checkbox for specifying execution of the image processing 6005 (see FIG. 6) for adding sunglasses and glasses to the image selected by the user from among the display in the search result display area 3020, and adding images of the result thereof (an image additionally having sunglasses and the like to the person in the target image or an image from which sunglasses are taken off from the person) to the new candidate of the search key image.

The different angle checkbox 3204 is a checkbox for specifying execution of the image processing 6006 (see FIG. 6) for changing the direction of the person in the image selected by the user from among the display in the search result display area 3020, and adding images of the result thereof (an image in which the direction of the person in the target image is changed) to the new candidate of the search key image.

In a case where the similar person search button from search result 3300 is pressed down while one or more of these checkboxes 3201 to 3204 is checked, the image processing corresponding to the checkbox in the checked state is executed on each image selected by the user from among the display in the search result display area 3020, and the image generated as a result is added as the new candidate of the search key image, and thereafter the similar image search is executed on the new candidate of the search key image by using the feature amount of the image as the search key.

In this example, search key determination means is realized by the function of the multiple-search key selection unit 113 of the terminal device 103, and the search means is realized by the similar person search unit 218 of the recording device 102, but the search key determination means and the search means may be realized in accordance with other aspects.

Subsequently, a security system including an explosive detection device according to the present invention will be shown with reference to FIG. 1. The security system according to the present invention includes a detection device 300, a network 200, and a security center 400, and structures a security system by connecting each detection device 300 via the network 200. Information gathered in the security center 400 is collated with the database, and the risk determination is performed. In a case where it is determined to be more than a certain level as a result of the risk determination, an alarm is issued, a measure can be taken to, e.g., transmit a command to a security guard so as to perform luggage inspection of a target person.

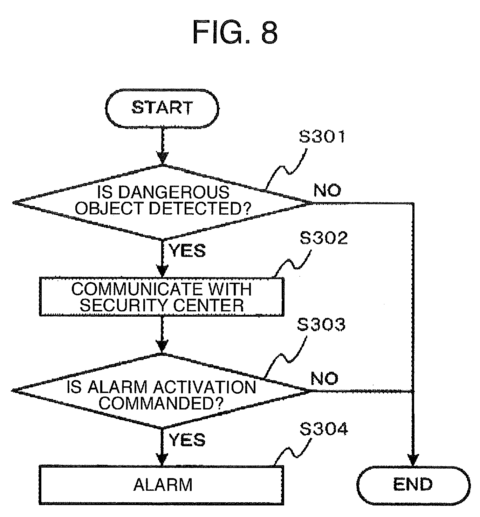

First, an overview of a dangerous object determination method performed with the detection device 300 and the security center 400 will be explained with reference to FIG. 8. The detection device 300 determines whether there is a dangerous object or not by starting detection of the dangerous object (S301). In a case where a dangerous object is discovered, the detection device 300 communicates with the security center 400 via the network 200 (S302). The security center 400 performs risk determination by using a database, a risk determination logic, and the like. In a case where the security center 400 determines that it is dangerous in the risk determination, a command of an alarm activation is sent to the detection device 300 via the network 200, and in a case where a command of an alarm activation is given from the security center 400 (S303), the detection device 300 activates an alarm (S304).

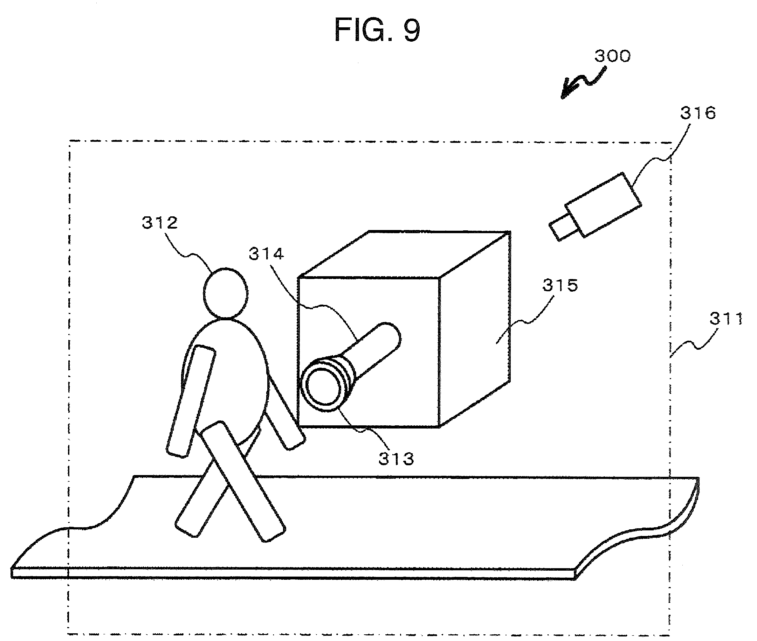

An example of a configuration of the detection device 300 according to the present invention will be explained with reference to FIG. 9. Multiple detection devices 300 are installed at multiple locations, and the detection device 300 includes a detection unit and an individual identification unit as necessary. In this case, the detection device 300 is considered to be an explosive detection device, and an example will be explained in which a mass spectrometer 315 is used as a detection unit, and the monitor camera 316 is used as an individual identification unit. Optionally, the monitor camera 316 may be replaced with the image-capturing device 201 explained above.

A portion enclosed by a line indicating an inspection range is denoted as an inspection area 311. The mass spectrometer 315 performs inspection to determine whether a person 312, who passes through this inspection area 311 and who is an inspection target, possesses an explosive or not. A combination of the inspection area and the inspection target may be, for example, a luggage (inspection target) placed on a belt conveyer (inspection area). Air sucked through the inlet unit 313 is sent to the mass spectrometer 315 via the sample inlet pipe 314. The mass spectrometer 315 performs inspection to determine whether an explosive component is included in the atmosphere or not. More specifically, a mass spectrum is obtained, and a determination is made as to whether there is any dangerous object or not by performing collation with a database provided in the mass spectrometer 315 in accordance with a mass-to-charge ratio (m/z) and an ion strength of detected ions. Various methods (for example, ion mobility method, chemiluminescence method, laser-induced fluorescence detection method, and the like) are known as dangerous object presence/absence determination processing, and the dangerous object presence/absence determination processing is not limited to the mass spectrometry, and it may be possible to use these various methods. In a case where it is determined that there is a dangerous object, the determination result and the video captured by the monitor camera 316 is sent to the security center 400 via the network 200 as necessary, and the risk determination processing is performed. In a case where the command of the alarm activation is sent from the security center 400 via the network 200 to the detection device 300, the detection device 300 activates an alarm. In the method of the alarm activation, a device emitting sound and light may be incorporated into the inside of the mass spectrometer 315, and this device may be driven, or these devices may be provided in a waiting room of security personnel so as to allow direct communication with the security personnel. The inspection area 311 may be closed by a shutter and the like, and various alarm activation modes can be used. Optionally, the captured video may be obtained not only from the monitor camera 316 but also from the image-capturing device 201 separately connected via the network 200.

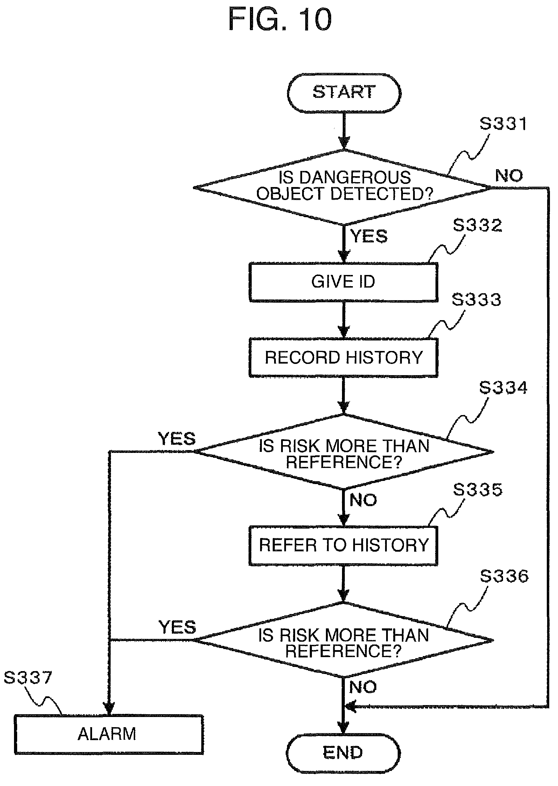

The details of the risk determination performed with the security center 400 according to the present invention will be explained with reference to FIG. 10. When a video captured by the monitor camera 316 or the image-capturing device 201 and a communication indicating that a dangerous object is detected are sent from the detection device 300 to the security center 400, a check is performed to find whether a dangerous object is detected or not (S331). In the security center 400, the detection signal and the video captured by the monitor camera 316 or the image-capturing device 201 is associated with an ID for the purpose of facilitating recording for a later point in time (S332). Then, a history such as an ID, a detection time, a detection signal (or a detection content), the video captured by the monitor camera 316 or the image-capturing device 201, and the like are recorded to the database (S333). Thereafter, in the security center 400, a risk of the detected dangerous object is determined (S334), and in a case where it is determined to be more than a predetermined risk (YES), the detection device 300 is commanded to activate an alarm (S337). On the other hand, in a case where it is determined not to be more than a predetermined risk (NO), the past history is referred to (S335). Then, a risk determination including the past history is performed again (S336), and in a case where it is determined to be more than a predetermined risk, a command of alarm activation is given to the detection device 300 (S337).

In addition, the alarm information sent from the security center 400 to the detection device 300 is directly transmitted to the recording device 102 via the network 200. In the recording device 102, a subject suspected of a dangerous object possession is searched for by using the similar face image search technique on the camera video of the detection device 300 (video captured by the monitor camera 316 or the image-capturing device 201).

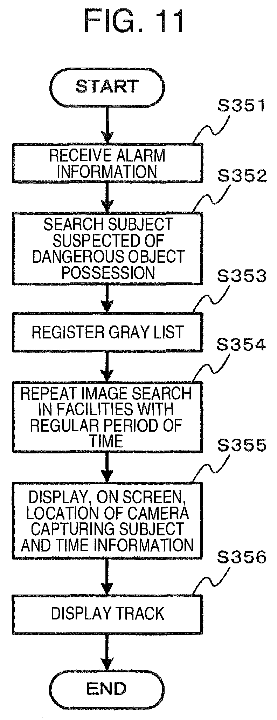

In this case, a search method for searching a subject suspected of a dangerous object possession performed by the image search system according to an embodiment of the present invention will be explained with reference to FIG. 11.

FIG. 11 is a figure illustrating an example of a search method for searching a subject suspected of a dangerous object possession performed by the security system including the detection device and the similar image search system according to an embodiment of the present invention.

First, when the recording device 102 receives alarm information sent from the detection device 300 via the network 200, the similar person search unit 218 in the recording device 102 extracts alarm activation time information included in the alarm information (S351). On this alarm activation time information, the similar person search unit 218 of the recording device 102 carries out the face image search from images captured a predetermined seconds or more before (for example, five seconds before) the alarm activation time in the camera video at a location where the detection device 300 is installed, thus extracting a subject suspected of a dangerous object possession (S352).

In this case, the feature of the present invention lies in that the similar person search unit 218 of the recording device 102 performs face image search of images captured the predetermined seconds before the alarm activation time, and thereafter extracts multiple suspected subjects without identifying the dangerous object holder, and registers the search result as a subject suspected of a dangerous object possession in a gray list (S353). The similar face image search is carried out on each subject suspected of a dangerous object possession registered in the gray list with a regular period of time (S354).

Subsequently, in a case where the subject suspected of the dangerous object possession registered in the gray list is found by search in the similar face image search, the similar person search unit 218 of the recording device 102 records, to a recording unit, not shown, position information about an installation location of the monitor camera 316 or the image-capturing device 201 that discovered the subject suspected of the dangerous object possession, time information, and the like, and the search result transmission unit 220 of the recording device 102 transmits the information to the search result reception unit 222 of the terminal device 103. The search result display unit 223 of the terminal device 103 displays, on a screen, the position information about the installation location of the monitor camera 316 or the image-capturing device 201 that discovered the dangerous object possession suspect, the time information, and the like transmitted from the recording device 102 (S355). The terminal device 103 displays a track of the subject suspected of the dangerous object possession on a map on the basis of the position information about the installation location of the monitor camera 316 or the image-capturing device 201 and the time information (S356). The tracks of multiple subjects suspected of the dangerous object possession registered in the gray list may be displayed simultaneously.

Further, from the subjects suspected of the dangerous object possession made into a gray list, for example, the dangerous object holder can be narrowed from the subjects suspected of the dangerous object possession by using multiple videos captured at a different location and at a different point in time from the camera video for which the alarm information is sent. For example, time before-and-after information about activation of alarm information and detection device 300 proximity information about activation of alarm information are set, and the similar face image search is performed on all the videos corresponding to the set information, so that a person having a high degree of frequency can be identified.

Therefore, a person that is most likely to be the dangerous holder can be identified from the subjects suspected of the dangerous object possession made into the gray list. The track of the dangerous object possession subject candidate can be visually found by displaying, on a map, a result of the similar face image search that is performed by setting the time before-and-after information about activation of the alarm information and the detection device 300 proximity information about activation of the alarm information.

As another embodiment, for example, when a gate is provided in the detection device 300, and person detection sensors of infrared ray and the like are installed at an entrance and an exit of the gate, and a detection can be performed to find how many people passed through the gate within a predetermined period of time. Therefore, when the person number information about the number of people is transmitted to the similar person search unit 218 in the recording device 102 via the network 200, and the similar person search unit 218 receiving the person number information can use this person number information for making the gray list of the subjects suspected of the dangerous object possession based on the similar face image search and search result.

The dangerous object holder may not be identified into a single person in advance, and the subjects suspected of the dangerous object possession of the search result made into the gray list may be adopted as a gay list, and the person registered as the gray list can give a command to make the security check stricter by, for example, checking presence/absence of a luggage.

Therefore, when the recording device 102 receives alarm information from the detection device 300 via the network 200, extraction and tracking of the subjects suspected of the dangerous object possession and display of movement directions of the subject suspected of the dangerous object possession can be automatically performed, which can help the investigation.

According to the image search system according to an embodiment of the present invention, a security system based on an explosive detection device and an image search system based on an application of a similar image search technique, which operated independently of each other, are connected via a network, so that the image search system can be operated in a shorter time on the basis of information about discovery of a subject suspected of an explosive possession given by the explosive detection device, and an explosive holder can be found in a shorter time and more appropriately from among a great number of passengers.

### INDUSTRIAL APPLICABILITY

For example, the present invention can be applied to not only inspection of dangerous object possession at a location where there are relatively a small number of people such as airports and important facilities, but also inspection of dangerous object possession at a location where there are a great number of people such as stations.

### REFERENCE SIGNS LIST

102: recording device, 103: terminal device, 110: keyword recording unit, 111: keyword search unit, 112: keyword assignment request transmission unit, 113: multiple-search key selection unit, 200: network, 201: image-capturing device, 210: image transmission and reception unit, 211: image recording unit, 212: playback control unit, 213: person area detection unit, 214: person feature amount extraction unit, 215: person feature amount recording unit, 216: attribute information recording unit, 217: request reception unit, 218: similar person search unit, 219: appearance event search unit, 220: search result transmission unit, 221: search request transmission unit, 222: search result reception unit, 223: search result display unit, 224: playback image display unit, 225: screen operation detection unit, 240: bus, 241: image-capturing unit, 242: main storage unit, 243: encoding unit, 244: network I/F, 250: bus, 251: CPU, 252: main storage unit, 253: auxiliary storage unit, 254: network I/F, 260: bus, 261: CPU, 262: main storage unit, 263: auxiliary storage unit, 264: display I/F, 266: network I/F, 270: display device, 280: keyboard, 282: mouse, 300: detection device, 311: inspection area, 312: person, 313: inlet unit, 314: sample inlet pipe, 315: mass spectrometer, 316: monitor camera, 400: security center, 3001: playback image display area, 3002: moving image, 3003: image playback operation area, 3004: search key image specifying area, 3005: search key image, 3006: video specifying button, 3007: file specifying button, 3008: search narrowing-down parameter specifying area, 3009 to 3012: image-capturing device specifying checkbox, 3013, 3014: time specifying checkbox, 3015, 3016: time specifying field, 3017: search execution area, 3018: similar person search button, 3019: appearance event search button, 3020: search result display area, 3031, 3041, 3051, 3061, 3071, 3081, 3091, 3101, 3111, 3121, 3131, 3141: search result image, 3032: cue playback button, 3033: search key video specifying button, 3201: the same scene checkbox, 3202: mask checkbox, 3203: sunglasses checkbox, 3204: different angle checkbox, 3300: similar person search button from search result, 3301: search target checkbox.

## Claims

1. An image search system including at least one image-capturing device outputting captured image data, a recording device recording image data received from the image-capturing device to a recording medium, a detection device detecting a dangerous object, and a network performing communication by connecting devices with each other,
the image search system comprising:
reception means receiving, via the network, alarm information based on dangerous object detection transmitted from the detection device;
subject extraction means extracting a subject suspected of a dangerous object possession by performing face image search of image data given by the image-capturing device installed around the detection device by adopting, as a search condition, an alarm activation time and a predetermined time before the alarm activation time, on the basis of the alarm activation time information included in the alarm information received by the reception means;
gray list registration means registering, to a gray list, the subject suspected of the dangerous object possession extracted by the subject extraction means; and
subject search means carrying out similar face image search, with a regular interval of time, of the image data recorded in the recording device for each subject suspected of the dangerous object possession registered in the gray list by the gray list registration means.

2. The image search system according to claim 1, comprising:
subject information display means displaying, on a screen, position information about an installation location of the image-capturing device capturing the subject suspected of the dangerous object possession and the alarm activation time, in a case where the subject suspected of the dangerous object possession registered in the gray list is found by the subject search means; and
track display means displaying, on a map, a track of the subject suspected of the dangerous object possession, on the basis of the position information about the image-capturing device capturing the subject suspected of the dangerous object possession displayed by the subject information display means.

3. The image search system according to claim 2, comprising multi-track display means searching each of a plurality of subjects suspected of the dangerous object possession registered in the gray list, and displaying each of the plurality of tracks simultaneously.

4. The image search system according to claim 3, comprising dangerous object holder identifying means setting alarm activation time before-and-after information and alarm activation detection device proximity information, and performing similar face image search of all videos corresponding to the set information, so that the dangerous object holder identifying means registers the search result as the subject suspected of the dangerous object possession to the gray list, and identifies, for the subject suspected of the dangerous object possession registered in the gray list, a dangerous object holder by using a plurality of videos captured at a different location and at a different time from a camera video that is set at a location where alarm information is activated.

5. The image search system according to claim 4, comprising search result map display means displaying, on a map, a result of similar face image search that is performed by setting the alarm activation time before-and-after information and the alarm activation detection device proximity information.

6. The image search system according to claim 5, comprising passage person number counting means providing a gate in the detection device, having a person detection sensor installed at an entrance/exit of the gate to perform detection to find how many people passed through the gate within a predetermined period of time, transmitting the person number information about the number of people that passed through the gate to the recording device in the recording device via the network, and using the person number information for making the gray list of the subject suspected of the dangerous object possession.

7. An image search method for an image search system including at least one image-capturing device outputting captured image data, a recording device recording image data received from the image-capturing device to a recording medium, a detection device detecting a dangerous object, and a network performing communication by connecting devices with each other,
the image search step comprising:
a reception step for receiving, via the network, alarm information based on dangerous object detection transmitted from the detection device;
a subject extraction step for extracting a subject suspected of a dangerous object possession by performing face image search of image data given by the image-capturing device installed around the detection device by adopting, as a search condition, an alarm activation time and a predetermined time before the alarm activation time, on the basis of the alarm activation time information included in the alarm information received by the reception step;
a gray list registration step for registering, to a gray list, the subject suspected of the dangerous object possession extracted by the subject extraction step; and
a subject search step for carrying out similar face image search, with a regular interval of time, of the image data recorded in the recording device for each subject suspected of the dangerous object possession registered in the gray list by the gray list registration step.

8. The image search method according to claim 7, comprising:
a subject information display step for displaying, on a screen, position information about an installation location of the image-capturing device capturing the subject suspected of the dangerous object possession and the alarm activation time, in a case where the subject suspected of the dangerous object possession registered in the gray list is found by the subject search step; and
a track display step for displaying, on a map, a track of the subject suspected of the dangerous object possession, on the basis of the position information about the image-capturing device capturing the subject suspected of the dangerous object possession displayed by the subject information display step.

9. The image search method according to claim 8, comprising a multi-track display step for searching each of a plurality of subjects suspected of the dangerous object possession registered in the gray list, and displaying each of the plurality of tracks simultaneously.

10. The image search method according to claim 9, comprising a dangerous object holder identifying step for setting alarm activation time before-and-after information and alarm activation detection device proximity information, and performing similar face image search of all videos corresponding to the set information, thus registering the search result as the subject suspected of the dangerous object possession to the gray list, and identifying, for the subject suspected of the dangerous object possession registered in the gray list, a dangerous object holder by using a plurality of videos captured at a different location and at a different time from a camera video that is set at a location where alarm information is activated.

11. The image search method according to claim 10, comprising a search result map display step for displaying, on a map, a result of similar face image search that is performed by setting the alarm activation time before-and-after information and the alarm activation detection device proximity information.

12. The image search method according to claim 11, comprising a passage person number counting step for providing a gate in the detection device, having a person detection sensor installed at an entrance/exit of the gate to perform detection to find how many people passed through the gate within a predetermined period of time, transmitting the person number information about the number of people that passed through the gate to the recording device in the recording device via the network, and using the person number information for making the gray list of the subject suspected of the dangerous object possession.

13. A recording device connected, via a network, to at least one image-capturing device outputting captured image data and a detection device detecting a dangerous object, and recording image data received from the image-capturing device to a recording medium,
the recording device comprising:
reception means receiving, via the network, alarm information based on dangerous object detection transmitted from the detection device
subject extraction means for extracting a subject suspected of a dangerous object possession by performing face image search of image data given by the image-capturing device installed around the detection device by adopting, as a search condition, an alarm activation time and a predetermined time before the alarm activation time, on the basis of the alarm activation time information included in the alarm information received by the reception means;
gray list registration means registering, to a gray list, the subject suspected of the dangerous object possession extracted by the subject extraction means; and
subject search means carrying out similar face image search, with a regular interval of time, of the image data recorded in the recording device for each subject suspected of the dangerous object possession registered in the gray list by the gray list registration means.
